(19) Europäisches Patentamt
European Patent Office
Office européen des brevets

(11) Publication number: **0 441 285 A1**

# (12) EUROPEAN PATENT APPLICATION

(21) Application number: **91101443.9**

(51) Int. Cl.[5]: **C08L 95/00**

(22) Date of filing: **02.02.91**

(30) Priority: **09.02.90 US 478315**

(43) Date of publication of application:
**14.08.91 Bulletin 91/33**

(84) Designated Contracting States:
**AT BE CH DE ES FR GB IT LI NL**

(71) Applicant: **THE DOW CHEMICAL COMPANY**
**2030 Dow Center Abbott Road P.O. Box 1967**
**Midland Michigan 48640-1967(US)**

(72) Inventor: **Nutt, Michael O.**
**937 Louray**
**Baton Rouge, Louisiana 70808(US)**

(74) Representative: **Sternagel, Hans-Günther, Dr. et al**
**Patentanwalte Dr. Michael Hann, Dr. H.-G. Sternagel, Dr. H. Dorries Sander Aue 30**
**W-5060 Bergisch Gladbach 2(DE)**

## (54) Asphalt blends containing sulfonated elastomer microemulsions.

(57) A composition comprising asphalt and an aqueous microemulsion of a sulfonated elastomer useful in the preparation of paving, sealing and adhesive formulations.

EP 0 441 285 A1

## ASPHALT BLENDS CONTAINING SULFONATED ELASTOMER MICROEMULSIONS

The use of petroleum residuum such as asphalt as a paving material, crack sealant, chip sealant, roofing material, adhesive and the like is well known. It is also well known that the physical properties of such asphalts can be modified by blending various polymeric materials, such as polyethylene, and elastomers, such as styrene-butadiene-styrene block copolymers with the asphalt.

In U.S. Patent 3,238,173 it is suggested that a block copolymer latex could be combined with an asphalt cut-back containing from 50 to 90 percent asphalt.

In U.S. Patent 4,585,816 blends of asphalt and a solvent dispersed block copolymer are disclosed.

U.S. Patent 4,514,308 taught the preparation of blends of asphalt and hydrogenated conjugated dienes which were afterward sulfonated.

Previous artisans have employed emulsions of the elastomer to prepare blends with asphalt. Disadvantageously such blends depend on a surfactant to form a stable emulsion from the elastomer. When heated or when contacted with certain agents such as salts or other ionic materials, the surfactant is destroyed and the emulsion is destabilized thereby leading to separation of the blend. It is the object of the invention to provide a stable mixture of asphalt and of an aqueous microemulsion of an elastomer, and a process for the preparation thereof.

This object is attained by a composition comprising asphalt and a microemulsion of a sulfonated elastomer, especially a sulfonated styrene diene block copolymer which is free of surfactants. The blend avoids the use of surfactants and other emulsifying agents previously employed to form emulsions of elastomers for incorporation into asphalt materials. The resulting blends are more stable than similar blends prepared with the use of emulsifiers and may contain ionic materials that would destabilize surfactant containing blends.

Thus according to the present invention there is provided a bituminous composition comprising asphalt and an aqueous microemulsion of a sulfonated elastomer free of surfactants. In addition there is provided a process for preparing the above composition wherein asphalt is combined with an aqueous microemulsion of a sulfonated elastomer. In a preferred embodiment an asphalt emulsion or microemulsion is combined with an aqueous microemulsion of a sulfonated elastomer. In a subsequent step the aqueous phase may be substantially removed to form a stable mixture of the sulfonated elastomer and the asphalt. The aqueous phase is preferably removed by heating the mixture or drying by exposure to the atmosphere. Preferably at least 90 percent by weight of the water is removed by drying.

The bituminous composition preferably comprises weight ratios of asphalt from 10 to 99.9 percent, more preferably 95 to 99 percent based on dry solids content. Asphalt emulsions, where used, may be either of the oil-in-water or water-in-oil type, containing asphalt in an amount from 5 to 100 weight percent, preferably 50 to 80 weight percent.

The asphalt or asphaltic material employed in the practice of the present invention is not critical. Any bitumen, asphalt or crude residuum of petroleum refining can be employed. In general, the asphalts which can be employed include conventional petroleum asphalts, natural asphalts, gilsonite, air blown asphalts, coal tar and other similar materials. Suitable asphalts are characterized, for example, by having penetration grades of up to 300 as measured by ASTM Method D-5. Suitable asphalts are also characterized by a viscosity grading method, as defined and measured by ASTM 2171, i.e., AC2.5, AC5, AC10, AC20, AC30 and AC40. AC indicates asphalt cement and the number indicates viscosity at 60 °C (140 °F) in 0.1 Pa•s (poise) divided by 100. Preferred asphalts for use as paving materials are those with an AC grade of 40 or less, or penetration numbers of 30 or more. The choice of the AC grade or penetration number will depend on the application for which the blend is to be used.

If the asphalt is provided in an emulsion form, any suitable method for preparing such emulsion may be employed. For example, the asphalt emulsion may be prepared by blending water, asphalt and a suitable emulsifying agent. Various methods for preparing such asphalt emulsions are taught for example in U.S. Patent Nos.: 4,547,224; 4,494,992; 4,478,642; 4,222,916; 4,209,337; 3,933,710; and 3,867,162. In addition the asphalt may also be sulfonated and dispersed as a microemulsion (in the absence of any surfactant) in water.

By the term "microemulsion" is meant the formation of an aqueous mixture wherein the dispersed material maintains a particle size that is less than colloidal size and is not subject to settling which mixture is stabilized against demulsification by functional groups contained in the elastomer. Generally microemulsions are formed by sulfonating the elastomer, neutralizing the resulting sulfonate groups and dispersing the same in water. Any suitable elastomer that is capable of sulfonation and subsequent neutralization to yield a water dispersible material capable of forming a stable

microemulsion may be employed according to the present invention. The amount of elastomer in the microemulsion on a dry weight basis preferably lies between 1 and 75 percent, most preferably between 5 and 50 percent, based on total microemulsion weight.

Suitable elastomers include block copolymers of an alkenyl aromatic monomer and a conjugated diene especially block copolymers of styrene and butadiene and more particularly the so called tapered block copolymers. Such block copolymers can comprise at least one polymer block, A, comprised of the polymerization product of one or more monoalkenyl aromatic monomers and at least one polymer block, B, prepared either by polymerization of ore or more conjugated alkadienes or by copolymerization of one or more conjugated alkadienes with one or more monoalkenyl aromatic monomers. Preferably the block copolymer comprises from 5 to 50, more preferably 15-40, weight percent of the monoalkenyl aromatic monomer and 50 to 95, more preferably 60 to 85, weight percent conjugated diene.

Preferred block copolymers are those of the formula $(AB)_nBA$ (n is a number from 0 to 20 indicating the average number of repeating units) wherein the A block is formed from a monoalkenyl aromatic compound and the B block is an elastomeric polymer block formed from a conjugated diene compound. A preferred block copolymer is of the A-B-A type.

The A block more particularly comprises a polymer formed from one or more monoalkenyl aromatic monomers of the formula:

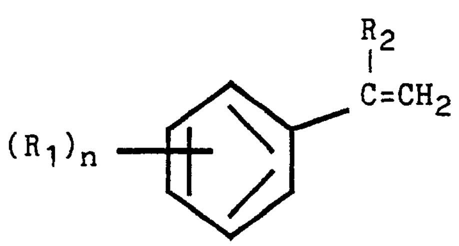

wherein n is an integer of 0 to 3, $R_1$ is individually selected from the group of alkyl radicals containing one to 5 carbon atoms and R2 is hydrogen or methyl. Such compounds include styrene, α-methylstyrene, vinyl toluene (all isomers alone or in admixture), ethylstyrene, dimethylstyrene, trimethylstyrene, tertiary butylstyrene, tertiary amylstyrene, isopropylstyrene and mixtures thereof. Preferably the A block comprises styrene.

The B block may comprise a polymer formed from a conjugated diene of from 4 to 5 carbon atoms, for example, butadiene, isoprene, and mixtures thereof. Preferably the B block comprises butadiene.

In a preferred embodiment the block copolymer is tapered. Tapered block copolymers are those wherein one or more of the respective polymer blocks gradually incorporates increasing percentages of the other monomer into the polymer as the junction between the respective blocks is approached. Particular tapered block copolymers which are useful herein are those taught in U.S. Patents 4,427,837, 4,431,777, 4,172,190 and 4,196,154. Most preferred are such block copolymers wherein one or more B blocks contain a gradual and continuous change of composition from A rich to B rich, as compared with an essentially pure A block connected directly to essentially pure B block. This can be referred to as a A-t-B configuration versus an entirely pure block copolymers configuration e.g., A-B. Most preferred are triblock copolymers wherein both A-B junctions are tapered.

The block copolymer preferably has a molecular weight of 10,000 to 1,000,000, more preferably, for reasons of better performance and handling, from 50,000 to 500,000 as determined by gel permeation chromatography. Normally the block copolymer is hydrogenated, if unsaturation is present prior to sulfonation.

In addition to the foregoing block copolymer elastomers, other suitable elastomers include the well known butyl rubbers and ethylene-propylene-diene terpolymers (EPDM). The expression "butyl rubber" as employed in the specification and claims is intended to include copolymers made from a polymerization reaction mixture having therein from 70 to 99.5 percent by weight of an isoolefin which has 4 to 7 carbon atoms, e.g., isobutylene, and 0.5 to 30 percent by weight of a conjugated multiolefin having from 4 to 14 carbon atoms, e.g., isoprene. The resulting copolymer contains 85 to 99.8 percent by weight of combined isoolefin and 0.2 to 15 percent of a combined multiolefin. The preparation of suitable butyl rubbers is disclosed in U.S. Patent 2,356,128.

The ethylene-propylene terpolymers (EPDM) are low unsaturated polymers having 0.5 to 15.0 weight percent olefinic unsaturation, more preferably 1 to 8, most preferably 2 to 7, defined according to the definition as found in ASTM D-1418-64, and are intended to mean terpolymers containing ethylene and propylene in the backbone and a diene in the side chain. Illustrative methods for producing these terpolymers are found in U.S. Patent No. 3,280,082. The preferred polymers contain 40 to 75 weight percent ethylene and 1 to 10 weight percent of a diene monomer, the balance of the polymer being propylene. Preferably, the polymer contains 45 to 70 weight percent ethylene, and 2.0 to 8.0 weight percent diene monomer. The

diene monomer is preferably a nonconjugated diene. Illustrative of these nonconjugated diene monomers which may be used in the EPDM terpolymer are 1,4-hexadiene, dicyclopentadiene, 5-ethylidene-2-norbornene, 5-methylene-2-norbornene and methyl tetrahydroindene.

In carrying out the process to prepare sulfonated elastomers the rubber is preferably dissolved in a nonreactive solvent, such as a chlorinated aliphatic solvent, chlorinated aromatic hydrocarbon, or an aliphatic hydrocarbon, such as carbon tetrachloride, dichloroethane, chlorobenzene, cyclohexane, pentane, isopentane, hexane, isohexane or heptane. The preferred solvents are the lower boiling aliphatic hydrocarbons. A sulfonating agent is added to the solution of the elastomeric polymer and nonreactive solvent at a temperature of -100 ° C to 100 ° C for a period of time of 1 to 60 minutes, more preferably 25 ° C to 50 ° C for 5 to 45 minutes, and most preferably 15 to 30 minutes. The typical sulfonating agents are described in U.S. Patent Nos. 3,642,728, 3,577,357 and 3,836,511. These sulfonating agents are selected from an acyl sulfate, a mixture of sulfuric acid and an acid anhydride or a complex of a sulfur trioxide donor and a Lewis base containing oxygen, sulfur or phosphorus. Typical sulfur trioxide donors are $SO_3$, chlorosulfonic acid, fluorosulfonic acid, sulfuric acid, oleum, etc. Typical Lewis bases are: dioxane, tetrahydrofurnal, tetrahydrothiophene or triethylphosphate. The most preferred sulfonation agent for this invention is an acyl sulfate selected from the group consisting of benzoyl, acetyl, propionyl and butyryl sulfate. The acyl sulfate can be formed in situ in the reaction medium or pregenerated before its addition to the reaction medium in an aliphatic or chlorinated aliphatic hydrocarbon.

It should be pointed out that neither the sulfonating agent nor the manner of sulfonation is critical, provided that the sulfonation method does not degrade the polymer backbone. The reaction is quenched with an aliphatic alcohol, such as methanol, ethanol or isopropanol, with an aromatic hydroxyl compound, such as phenol, a cycloaliphatic alcohol, such as cyclohexanol or with water. The acid form of the sulfonated elastomeric polymer has 4 to 200 meq. $SO_3H$ groups per 100 grams of sulfonated polymer, more preferably 10 to 100, and most preferably 10 to 50. The meq. of $SO_3H$/100 grams of polymer is determined by either titration of the polymeric sulfonic acid or Dietert Sulfur analysis. In the titration of the sulfonic acid the polymer is dissolved in solvent consisting of 95 parts of toluene and 5 parts of methanol at a concentration level of 50 grams per liter of solvent. The acid form is titrated with ethanolic sodium hydroxide to an Alizarin-Thymolphthale end-point.

The acid form of the sulfonated polymer is gel-free and hydrolytically stable. Gel is measured by stirring a given weight of polymer in a solvent comprised of 95-toluene-5-methanol at a concentration of 5 weight percent for 24 hours, allowing the mixture to settle, withdrawing a weighted sample of the supernatant solution and evaporating to dryness.

Hydrolytically stable means that the acid function, in this case the sulfonic acid, will not be eliminated under neutral or slightly basic conditions to a neutral moiety which is incapable of being converted to highly ionic functionality.

The microemulsion is preferably prepared by adding water to an organic solution of the neutralized sulfonated elastomer in an organic solvent which is nonmiscible with water, or alternatively adding the solution to water and thereafter removing the residual solvent. Preferred techniques for solvent removal are evaporation especially stripping by exposure to elevated temperatures, preferably from 30 to 150 ° C. Pressures for the stripping are preferably from 0.01 to 1 atmosphere. Generally the microemulsion is an oil-in-water type of dispersion preferably containing elastomer particles having a volume average particle size from 0.01 to 0.2 $\mu$m, most preferably from 0.05 to 0.1 $\mu$m. A suitable solvent is tetrahydrofuran. Because the microemulsion does not employ a surfactant, the composition of the present invention is highly stable and not subject to demulsification.

The asphalt and the microemulsion of the elastomer are blended together optionally with heating in suitable kneading or mixing equipment. Additional components may also be present in the mixture. It is preferred to first combine the microemulsion with additional components of the mixture, if present, especially if hot molten asphalt is employed. This procedure ensures more even distribution of elastomer into the asphalt. Examples of such additional components include fillers, aggregate, sulfur, etc. The various components are then thoroughly mixed to fully disperse the microemulsion into the asphalt. Further heating may be employed if it is desired to remove the water from the blend. Suitable mixing devices include hot rollers, heated tumbling mixers, stirred heated pots and gas fired tar mixers. Temperatures for the mixing are preferably above the softening point of the asphalt, more preferably from 50 ° to 250 ° C, most preferably from 160 ° to 200 ° C.

If an asphalt emulsion is employed, the blend is prepared by mild mixing of the microemulsion and the asphalt emulsion at a temperature from 20 ° C to 85 ° C for a time sufficient to provide adequate homogeneity to the blend. The blend may be dried to remove substantially all or a portion of the water if desired.

The blends of bitumen and microemulsion may be used for pavement (roadways, airport runways, sidewalks and the like), seal coats, chip seals, slurry seals and the like. Slurry seals comprise a slurry mixture of the asphalt emulsion/elastomer microemulsion described herein and an aggregate such as sand or gravel which is used to pave a surface. The water in the slurry is permitted to evaporate to provide the pavement. They are advantageous because they have a reduced tendency to flush and bleed at elevated temperatures. They can also be used at lower temperatures because of their reduced tendency to crack and ravel. They are very elastic and provide good chip adhesion and retention in chip seal applications. Because of the blend's good elasticity, they also find use as industrial coatings and other industrial uses such as coverings, felts, shingles, paints, and water proofing applications, such as automotive undercoatings and the like. For example, for use as a pavement the emulsion blend is spread on a surface as an emulsion and the aqueous phase is removed by evaporation. As a chip seal an emulsion blend of the invention is spread on a road surface, chips (e.g., ground aggregate, stones, etc.) are laid in the emulsion and the aqueous phase is removed by evaporation, such as by natural evaporation.

The following examples are provided for illustrative purposes and are not intended to limit the invention to the specific embodiments set forth therein.

Example 1

75 grams of a hydrogenated styrene/butadiene block copolymer containing 29 weight percent styrene and 71 weight percent butadiene (Kraton G-1652) is dissolved in 500 ml of chloroform. To 50 ml of 1,2-dichlorothane are added 20.4 ml of propionic anhydride followed by the slow addition of 5.5 ml of 96 percent sulfuric acid with stirring. This is brought up to 100 ml with additional 1,2-dichloroethane to give a propionyl sulfate solution of 1 meq/ml. 20.9 ml of the propionyl sulfate solution are added to the elastomer solution and heated to 50 °C for 3.5 hours. 50 ml of isopropanol are added to stop the reaction. The chloroform is distilled off and methanol/water added to precipitate the polymer. The polymer contained 0.47 percent sulfur (15 meq. $SO_3H$/100 g polymer). 7 grams of the polymer are dissolved in 50 ml of tetrahydrofuran. 400 ml of water are added with stirring and the tetrahydrofuran is removed by distillation. The microemulsion is evaporated to 50 ml giving a dry solids content of 14 weight percent and the volume average particle size is about 0.08 $\mu$m. The microemulsion is added to 100 grams of bitumen having a ring and ball softening point of 107 °C (225 °F) (ASTM D-36) and a penetration at 4 °C (40 °F) of 360 mm (ASTM D-5).

The resulting blend was melt blended thoroughly at a temperature of about 175 °C to produce an elastomer modified asphalt mixture.

Example 2

When 5 grams of the polymer prepared in Example 1 are similarly microemulsified and mixed with 200 grams of an aqueous asphalt emulsion having a dry solids content of 50 percent at 65 °C by thorough mixing, the resulting product is homogeneous and may be employed as a seal coat or similar emulsion product.

**Claims**

1. A composition comprising asphalt and an aqueous microemulsion of a sulfonated elastomer.

2. A composition of Claim 7 wherein the asphalt is present in an amount from 10 to 99.9 percent based on dry solids weight.

3. A composition according to Claim 1 wherein the sulfonated elastomer is a sulfonated hydrogenated block copolymer comprising a monoalkenyl aromatic monomer and a conjugated diene.

4. A composition according to Claim 3 wherein the monoalkenyl aromatic monomer is styrene and the conjugated diene is butadiene.

5. A composition according to Claim 4 wherein the block copolymer is of the formula $(AB)_nBA$ wherein n is a number from 1 to 20 indicating the average number of repeating units and A is a polymer block comprising styrene and B is a polymer block comprising butadiene.

6. A composition according to Claim 5 wherein the block copolymer is a tapered block copolymer.

7. A composition according to Claim 1 wherein the sulfonated elastomer contains from 4 to 200 meq. $SO_3H$ groups per 100 grams of sulfonated polymer.

8. A process for preparing a composition comprising asphalt and an aqueous microemulsion of a sulfonated elastomer by blending the asphalt with the aqueous microemulsion of said elastomer which is free of surfactant and forming a homogeneous mixture thereof.

**9.** A process according to Claim 8 wherein the asphalt is used in the form of an emulsion.

**10.** A process according to Claims 8 or 9 wherein the composition is dried to remove substantially all of the water.

**11.** Use of the composition of Claims 1-6 for pavements, seal coats, chip seals and/or slurry seals.

European
Patent Office

# EUROPEAN SEARCH REPORT

Application Number

**EP 91 10 1443**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 090 938 (SHELL)<br>– – – | | C 08 L 95/00<br>C 08 L 53/02 |
| A,D | US-A-4 514 308 (R.L.CLAMPITT)<br>– – – – – | | |
| | | | TECHNICAL FIELDS SEARCHED (Int. Cl.5) |
| | | | C 08 L<br>C 08 F |

The present search report has been drawn up for all claims

| Place of search | Date of completion of search | Examiner |
|---|---|---|
| The Hague | 17 May 91 | BUSCAGLIONE Y. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document